# EUROPEAN PATENT SPECIFICATION

(11) **EP 1 367 028 B1**
(45) Date of publication and mention of the grant of the patent: **26.09.2007**
(21) Application number: 03090161.5
(22) Date of filing: 28.05.2003
(51) Int. Cl.: C03B 37/014, C03B 37/018

(54) **A method for manufacturing a preform using a thermal treatment apparatus**
Verfahren zum Herstellen einer Vorform mittels einer Vorrichtung zur thermischen Behandlung
Procédé de fabrication d'une préforme utilisant un appareil de traitement thérmique

(30) Priority: 31.05.2002 JP 2002160270
(43) Date of publication of application: 03.12.2003
(73) Proprietor: Shin-Etsu Chemical Co., Ltd., Chiyoda-ku, Tokyo (JP)
(72) Inventor: Oyamada, Hiroshi, c/o Shin-Etsu Chemical Co., Ltd., Annaka-shi, Gunma-ken (JP); Inoue, Dai, c/o Shin-Etsu Chemical Co., Ltd., Annaka-shi, Gunma-ken (JP); Otosaka, Tetsuya, c/o Shin-Etsu Chemical Co., Ltd., Annaka-shi, Gunma-ken (JP)
(74) Representative: Pfenning, Meinig & Partner GbR

(56) References cited:
- US-A- 4 979 971
- PATENT ABSTRACTS OF JAPAN vol. 009, no. 041 (C-267), 21 February 1985 (1985-02-21) & JP 59 184734 A (FURUKAWA DENKI KOGYO KK), 20 October 1984 (1984-10-20)
- PATENT ABSTRACTS OF JAPAN vol. 011, no. 030 (C-400), 29 January 1987 (1987-01-29) & JP 61 201634 A (SUMITOMO ELECTRIC IND LTD), 6 September 1986 (1986-09-06)

## Description

### BACKGROUND OF THE INVENTION

### Field of the Invention

The present invention relates to a method for manufacturing a preform. More particularly, the present invention relates to a method for manufacturing a preform, wherein the amount of the OH radical thereof is small.

### Description of the Related Art

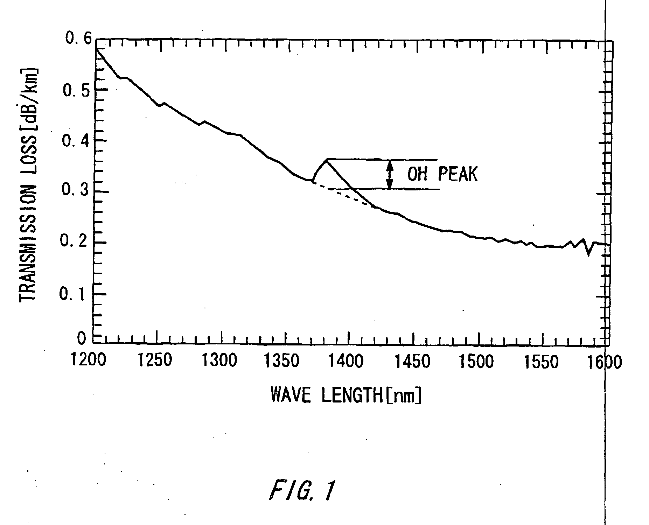

Fig. 1 shows the relation between the transmission loss of the general single mode optical fiber and the wavelength. Due to the use of the cheap semiconductor laser, the wavelengths around 1300 nmor 1550 nm have been used for the optical fiber communication. However, accompanying the progress of the recent wavelength division multiplexing (WDM) communication technology, in order to increase the transmission capacity it is necessary to use the broad wavelength band from 1300 nm to 1600 nm.

However, as shown in Fig. 1, the transmission loss of the general optical fiber rapidly increases in regard to the wavelengths around 1385 nm. If the transmission loss increases, it is required to increase the relay stations, which relay and amplify the light, for the long distance transmission of the optical signals. For this reason, the cost of the entire communication system increases.

Therefore, it is needed to prevent the rapid increase of the transmission loss with regard to the wavelengths around 1380 nm. Here, it is defined that the term OH peak is the difference between the peak value of the transmission loss with regard to the wavelengths around 1380 shown in Fig. 1 and the value of the transmission loss with regard to the wavelengths around 1380 in case the transmission loss does not increase rapidly but decreases slowly. For example, the value of the OH peak regarding Fig. 1 is about 0.06 dB/km. The rapid increase of the transmission loss with regard to the wavelengths around 1380 nm, that is, the OH peak results from that the OR radical included in the optical fiber vibrates and absorbs the light. It is necessary to decrease the OH radical included in the optical fiber preform in order to decrease the OH radical included in the optical fiber.

US-A-4 979 971 discloses a method for producing a glass preform for an optical fiber comprising in the following order the steps of: (a) producing fine glass particles consisting essentially of SiO₂ by flame hydrolysis of a glass-forming raw material; (b) depositing the fine glass particles on a seed member to produce a soot-deposited member; (c) placing the soot-deposited member in a muffle tube made of pure quartz; (d) heating the soot-deposited member in an inert gas containing a chlorine-containing compound which inert gas containing said compound is passed through the muffle tube to dehydrate the soot-deposited member; and (e) sintering the dehydrated soot-deposited member in an atmosphere consisting of helium and SiF₄ in an amount sufficient for adding fluorine to the soot which atmosphere is passed through the muffle tube, the sintering being carried out in the absence of the chlorine-containing compound and at a temperature not lower than 1,400°C, the sintering thereby forming a fluorine-added transparent glass preform for an optical fiber.

### SUMMARY OF THE INVENTION

Therefore, it is an object of the present invention to provide a method for manufacturing a preform, which is capable of overcoming the above drawbacks accompanying the conventional art.

This object according to the invention is solved by a method comprising the features of claim 1. Preferred embodiments of this method are defined in the subclaims.

According to the present invention, a method for manufacturing a preform of an optical fiber comprises the steps of (a) forming a porous glass preform by accumulating glass particles, (b) preparing a quartz glass container formed by heating quartz glass with an electric furnace, an amount of OH radical contained in said container being controlled to a value less than 150 ppm, (c) providing dehydration gas and inert gas to the container, (d) heating the container to which dehydration gas and inert gas are provided, (e) inserting said porous glass preform into said container after heating said container, and (f) dehydrating and sintering the Porous glass preform.

A method f or manufacturing a preform may further comprise a step of (g) eliminating moisture absorbed in the container in step (b) . The container may be heated under inert gas condition in step (g). The container may be heated with a temperature over 100°C in step (g). The container may be heated at every batch of manufacturing the preform in step (g).

The method for manufacturing a preform may further comprise a step of (h) crystallizing at least a part of the container in step (b). A method for manufacturing a preform, wherein an area of the container, which is heated in step (d), may be crystallized in step (h). The container may be heated with a temperature over 1500°C in step (h). The container, which may be provided inside another container, is heated in step (h). A method for manufacturing a preform may further comprise a step of (h) crystallizing at least a part of the container in step (b) by heating the container in a vacuum condition. A method for manufacturing a preform may further comprise a step of doping the container with aluminum in step (h) .

The amount of OH radical contained in the container preferably is controlled under 20 ppm in step (b).

### BRIEF DESCRIPTION OF THE DRAWINGS

Fig. 1 shows the relation between the transmission loss of the general single mode optical fiber and the wavelength. (RELATED ART)
Fig. 2 shows an example of the configuration of a porous glass preform sintering apparatus 700.
Fig. 3 shows an example of the flow of manufacturing a preform according to the exemplary embodiment.
Fig. 4 shows the detailed flow of the step of preparing the container (S10) in Fig. 3.
Fig. 5 shows the distribution of the OH peak of the optical fiber drawn from the final product of the preform according to the embodiment.
Fig. 6 shows the cross-sectional view of the container 14 used for the sintering process according to the embodiment.
Fig. 7 shows the distribution of the OH peak of the optical fiber drawn from the final product of the preform according to the compared example.
Fig. 8 shows the cross-sectional view of the container 50 used for the sintering process according to the compared example.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

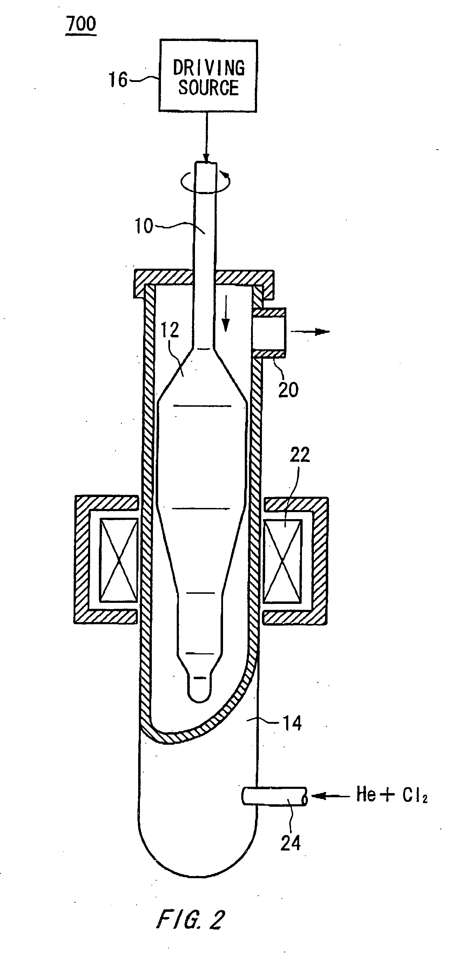

Fig. 2 shows an example of the configuration of a porous glass preform sintering apparatus 700. The porous glass preform sintering apparatus 700 includes a container 14, a heating source 22, a gas providing pipe 24 and a driving source 16. The container 14 is the quartz glass one formed by melting the quartz powder in the electric furnace. The heating source 22, which is placed on the circumference of the container 14, heats the container 14. The gas providing pipe 24 is connected to the lower part of the container so that the mixed gases, which are the inert gas such as Helium and the hydration gas such as chlorine gas (Cl₂), flow into the container through the gas providing pipe 24. The vent pipe 20 is connected to the upper part of the container 14 so that the mixed gases, which flow in from the bottom of the container 14, flow out of the vent pipe 20.

The driving source 16, which is placed at the top of the porous glass perform sintering apparatus 700, is connected to a core rod 10. Around the core rod 10, the porous glass preform 12 is formed. The driving source 16 inserts the porous glass preform 12 into the container 14 by making the core rod 10 move downward into the container 14. The container 14 is filled up with the mixed gases, which flow in from the gas providing pipe 24, and the periphery of the container 14 is heated by the heating source 22. Therefore, the porous glass preform 12 inserted into the container is heated under the mixed gases condition, so it is dehydrated and sintered.

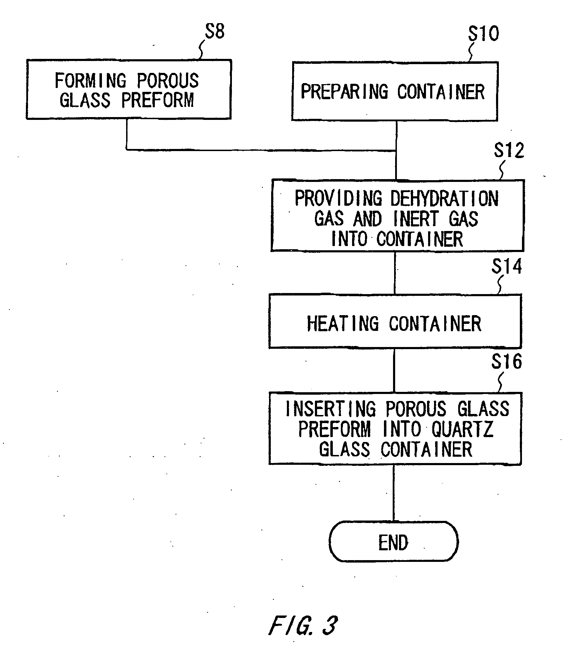

Fig. 3 shows an example of the flow of manufacturing a preform according to the exemplary embodiment. First, the porous glass preform is formed by accumulating the glass particles onto the circumference of the core rod 10 in the cylinder shape with the vapor axial deposition method (VAD) or the outside vapor deposition method (OVD) (S8). And, the container made of the quartz glass, which is formed by melting the quartz powder in the electric furnace, is prepared (S10) . Then, as described in Fig. 3, the dehydration gas and the inert gas are provided into the container 14 (S12), the container 14 is heated by using the heating source 22 (S14). Next, the porous glass preform 12 is dehydrated and sintered by inserting the porous glass preform 12 into the container 14, which is heated, by way of the driving source 16 (S16).

Due to the use of the container 14 made of the quartz glass, which is formed in the electric furnace, it is possible to make the amount of the OH radical contained in the container 14 be less than 20 ppm. Therefore, the amount of the OH radical of the preform, which is dehydrated and sintered, decreases so that it is possible to decrease the OH peak of the optical fiber, which is drawn from this preform.

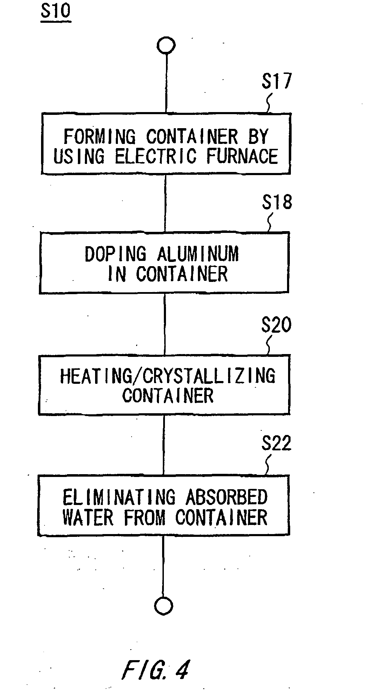

Fig. 4 shows the detailed flow of the step of preparing the container (S10) in Fig. 3. First, the container made of the quartz glass is formed by melting the quartz powder in the electric furnace (S17). The container 14 made of the quartz glass may be formed by making up the container by melting the quartz powder with the oxyhydrogen flame and dehydrating the container, which is heated in the electric furnace. Owing to forming the container by using the electric furnace it is possible to decrease the amount of the OH radical of the container. After the container 14 is formed in the electric furnace (S17), the processes from step S18 to step S22 shown in Fig. 4 may not be performed, but the following steps can be performed: providing the hydration gas and the inert gas into the container 14, which is described in regard to Fig. 3 by using the container 14 (S12), heating the container 14 by using the heating source 22 (S14) and dehydrating and sintering the porous glass preform 12 (S16). In addition, according to this embodiment, after the container 14 is formed in the electric furnace (S17), at least one of the steps from S18 to S22 shown in Fig. 4 may be performed. It is described below about each of the steps from S18 to S22. The container 14 is doped with Aluminum in step S18. Due to doping the container 14 with Aluminum (S18), the crystallization of the container 14 is accelerated, taking the Aluminum as the core of the crystal. It is preferable to dope at least the outward surface of the part of container 14, which is heated by the heating source 22, with Aluminum.

Then, at least a part of the container 14 such as the position, where the heating source 22 is placed, is crystallized by heating the container 14 in step S20. In this case, a heater is installed in the position of the container 14, where the heating source 22 is placed, and the container 14 is heated. In addition, the whole of the container 14 maybe crystallized. If the whole of the container 14 is crystallized, the container 14 is placed inside another container, and it is heated with a temperature over 1500°C under the inert gas condition for a few hours. Moreover, the container 14 is placed inside another container and the inside of the other container is forced to be the vacuum state, so the container 14 may be heated under the vacuum condition. If the container 14 is heated to the temperature over 1500°C, the container 14 does not transform during the sintering of the porous glass preform 12, because the container 14 is crystallized to cristbalite. In addition, owing to the crystallization of the container 14, the OH radical included in the container is eliminated. Therefore, the amount of the OH radical, which is emitted from the container during the sintering of the porous glass preform 12, decreases, so the amount of the OH radical trapped in the porous glass preform 12 during the sintering decreases. For this reason, the amount of the OH radical in the manufactured preform can be diminished. Moreover, when the container 14 is heated with the temperature over 1500°C, it is preferable to make the inside pressure and the outside pressure of the container 14 actually be the same by adjusting the amount of the gas, which flow out of the heating furnace. Due to the adjustment, it is possible to prevent the transformation of the container 14 during the heating of the container 14.

The moisture absorbed in the surface of the container 14 is eliminated in step S22. In respect of the sintering process of the porous glass preform 12, the porous glass preform 12 is sintered one at every batch. Therefore, due to the insertion/extraction of the porous glass preform 12 into/from the container 14, it is likely to happen that the moisture in the outside air is absorbed in the surface of the container 14 when the container 14 is opened. In this regard, the moisture absorbed in the container 14 is eliminated (S22). Here, the elimination of the moisture includes the elimination of the OH radical. The container 14 is heated with the temperature over 100°C under the inert gas condition at every batch of manufacturing the preform in step S22. The elimination of the absorbed water may be done just before the porous glass preform 12 is sintered. In addition, the whole of the container 14 is heated over 100°C at any time, so the moisture absorption of the container 14 may be prevented. Due to the elimination of the absorbed water, the absorbed water is emitted from the container 14, so it is prevented that the moisture is trapped in the porous glass preform 12 during the sintering of the porous glass preform 12. For this reason, it is possible to decrease the amount of the OH radical of the manufactured preform.

In step S10, it is preferable to control the amount of the OH radical of the container 14 less than 150 ppm, and further preferable to control the amount of the OH radical of the container 14 under 20 ppm.

### [Exemplary embodiment]

The container 14 made of the quartz glass, which is formed by melting the quartz powder in the electric furnace, was prepared. The amount of the OH radical of the container 14 was about 20 ppm. The following processes were performed: doping the surface of the container 14 with Aluminum, heating the container 14 at 1500°C under the Aluminum condition for 10 hours and crystallizing the container 14 to cristbalite.

The porous glass preform 12 was sintered in the following sequences. Just before the hydrating/sintering process at every batch of manufacturing the preform, the container 14 was heated at about 100°C for a few minutes, while the dried Helium with the amount of H₂O of 1.2 ppb and the dew point of 75°C was given, then the absorbed water was eliminated. Next, the porous glass preform 12 was dehydrated. In the dehydrating process, the mixes gases of Helium and chlorine gas with the concentration of 10% was provided into the container 14, and the porous glass preform 12 was heated at 1100°C. The porous glass preform 12 remained at the position, where the heating source 22 of the container 14 was placed, for 30 minutes. Then, the porous glass preform 12 was sintered and became crystalline. In the sintering process, the porous glass preform 12 was heated at 1500°C under the Aluminum condition. The porous glass preform 12 remained at the position, where the heating source 22 of the container 14 was placed, for 15 minutes.

55 preforms were manufactured with the sequences above. Taking each preform as the core, the clad was accumulated on the circumference of the core with the outside vapor deposition method, and the final product of the preform was manufactured. The optical fiber was drawn from the final product of the preform, and the transmission loss of the optical fiber was measured.

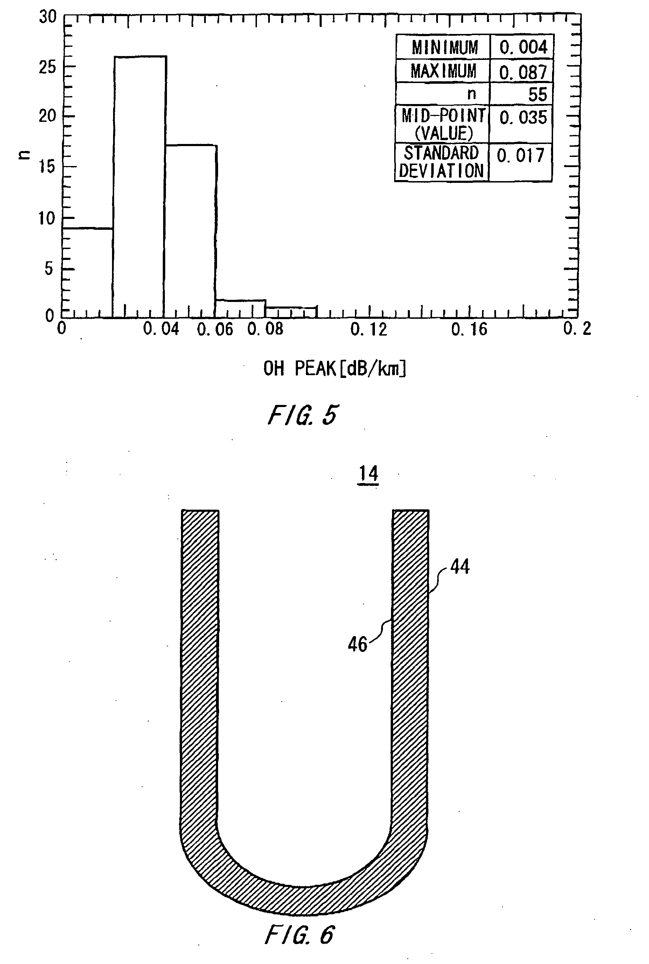

Fig. 5 shows the distribution of the OH peak of the optical fiber drawn from the final product of the preform according to the embodiment. As shown in Fig. 5, the value of the OH peak ranges from 0.004 dB/km to 0.087 dB/km. Thus, with respect to the value of the OH peak according to the embodiment, the range of the distribution of the OH peak is narrower than the OH peak of the compared example described below, and besides the value of the OH peak itself is small. It is possible to use the optical fiber drawn form this preform for the wavelength multiplexing communication in which the used wavelength band is broad. Moreover, as the porous glass preform 12 was sintered without performing the crystallization and the absorbed water elimination of the container 14, the OH peak of the optical fiber drawn from the manufactured preform is 0.25 dB/km, and a higher value than the OH peak shown in Fig. 5.

Fig. 6 shows the cross-sectional view of the container 14 used for the sintering process according to the embodiment. The inner surface 44 and the outer surface 46 of the container 14 were crystallized to the cristbalite. For this reason, the container 14 did not transform during the sintering process. The moisture was not actually emitted from the container 14 during the sintering process, because the amount of the OH radical of the container 14 manufactured in the electric furnace is small, i.e., 20 ppm, and besides the container 14 was crystallized to the cristbalite so the absorbed water was eliminated. Thus, as shown in Fig. 6, the inner surface 44 of the container 14 after the completion of the sintering process was not uneven but smooth. In addition, since the moisture emission from the container 14 during the sintering process did not actually happen, the amount of the OH radical in the manufactured preform decreased, compared with the amount of the OH radical in the preform regarding the compared example below.

### [Comparative example]

The porous glass preform 12 was sintered under the condition, which is the same as that of the exemplary embodiment except using a container made of the quartz glass, which was manufactured by melting the quartz powder with the oxyhydrogen flame. The amount of the OH radical of the container was about 150 ppm. Under the same condition as the exemplary embodiment, the container was crystallized, the absorbed water was eliminated from the container and the porous glass preform was sintered by using the container. 58 preforms were manufactured with the sequences above. Taking each preform as the core, the clad was accumulated on the circumference of the core with the outside vapor deposition method, and the final product of the preform was manufactured. The optical fiber was drawn from the final product of the preform, and the transmission loss of the optical fiber was measured.

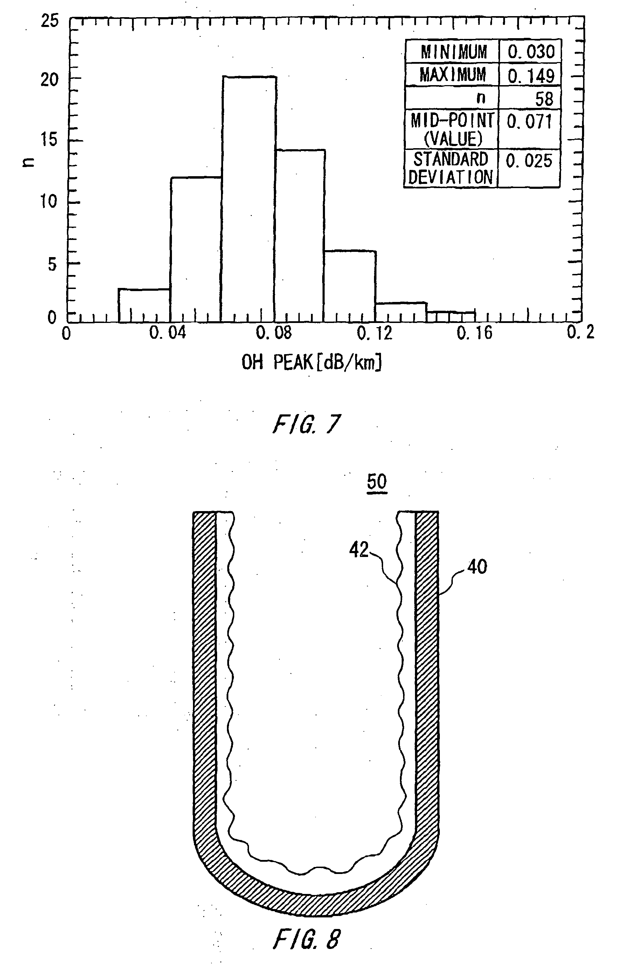

Fig. 7 shows the distribution of the OH peak of the optical fiber drawn from the final product of the preform according to the compared example. As shown in Fig. 7, the value of the OH peak ranges from 0.030 dB/km to 0.149 dB/km, which is spread over the wide range. Thus, It is impossible to use the optical fiber drawn form this preform for the wavelength multiplexing communication in which the used wavelength band is broad. Moreover, as the porous glass preform 12 was sintered without performing the crystallization and the absorbed water elimination of the container 14, the OH peak of the optical fiber drawn from the manufactured preform is 0.12 dB/km, and besides a higher value, which is within the distribution of the OH peak shown in Fig. 7.

Fig. 8 shows the cross-sectional view of the container 50 used for the sintering process according to the compared example. The outer surface 40 of the container 50 is crystallized to the cristbalite. Therefore, the container 50 did not transform during the sintering process. Meanwhile, the inner surface 42 of the container 50 foamed and transformed to have the uneven surface, because the moisture of a little quantity dissolving in the container 50 was emitted during the sintering process . The moisture emitted from the container 50 during the sintering process was trapped in the porous glass preform 12, so the amount of the OH radical in the manufactured preform increased.

Although the present invention has been described by way of exemplary embodiments, it should be understood that those skilled in the art might make many changes and substitutions without departing from the spirit and the scope of the present invention, which is defined only by the appended claims.

## Claims

1. A method for manufacturing a preform (12) of an optical fiber, comprising the steps of:
(a) forming a porous glass preform (12) by accumulating glass particles;
(b) preparing a container (14) made of a quartz glass, which is formed by heating said quartz glass with an electric furnace, an amount of OH radical contained in said container (14) being controlled to a value less than 150 ppm;
(c) providing a dehydration gas and an inert gas to said container (14);
(d) heating said container (14) to which dehydration gas and inert gas are provided;
(e) inserting said porous glass preform (12) into said container (14) after heating said container (14); and
(f) dehydrating and sintering said porous glass preform (12).

2. A method for manufacturing a preform as claimed in claim 1, further comprising a step of (g) eliminating moisture absorbed in said container (14) in said step (b).

3. A method for manufacturing a preform as claimed in claim 2, wherein said container (14) is heated under inert gas condition in said step (g).

4. A method for manufacturing a preform as claimed in claim 3, wherein said container (14) is heated to a temperature, which is the same with or higher than 100°C in said step (g).

5. A method for manufacturing a preform as claimed in claim 3, wherein said container (14) is heated at each batch of manufacturing said preform (12) in said step (g).

6. A method for manufacturing a preform as claimed in claim 1, further comprising a step of (h) crystallizing at least a part of said container (14) in said step (b).

7. A method for manufacturing a preform as claimed in claim 6, wherein an area of said container (14), which is heated in said step (d), is crystallized in said step (h).

8. A method for manufacturing a preform as claimed in claim 5, wherein said container (14) is heated with a temperature, which is the same with or higher than 1500°C in said step (h).

9. A method for manufacturing a preform as claimed in claim 6, wherein said container (14), which is provided inside another container is heated in said step (h).

10. A method for manufacturing a preform as claimed in claim 1, further comprising a step of (h) crystallizing at least a part of said container (14) in said step (b) by heating said container in a vacuum condition.

11. A method for manufacturing a preform as claimed in claim 6, further comprising a step of doping said container (14) with aluminum in said step (h).

12. A method for manufacturing a preform as claimed in claim 1, wherein an amount of OH radical contained in said container (14) is controlled under 20 ppm in said step (b).

## Patentansprüche

1. Verfahren zum Herstellen eines Vorformlings (12) einer optischen Faser, welches die Schritte aufweist:
(a) Bilden eines porösen Glasvorformlings (12) durch Akkumulieren von Glasteilchen;
(b) Herstellen eines Behälters (14) aus Quarzglas, der gebildet ist durch Erwärmen des Quarzglases mit einem elektrischen Ofen, wobei eine Menge von in dem Behälter (14) enthaltenen OH-Radikalen so gesteuert wird, dass ein Wert hierfür weniger als 150 ppm beträgt;
(c) Liefern eines Dehydratisierungsgases und eines inerten Gases zu dem Behälter (14);
(d) Erwärmen des Behälters (14), zu dem Dehydratisierungsgas und inertes Gas geliefert werden;
(e) Einführen des porösen Glasvorformlings (12) in den Behälter (14), nachdem der Behälter (14) erwärmt ist; und
(f) Dehydratisieren und Sintern des porösen Glasvorformlings (12).

2. Verfahren zum Herstellen eines Vorformlings nach Anspruch 1, weiterhin aufweisend einen Schritt (g) zum Eliminieren von in dem Behälter (14) im Schritt (b) absorbierter Feuchtigkeit.

3. Verfahren zum Herstellen eines Vorformlings nach Anspruch 2, bei dem der Behälter (14) unter einer inerten Gasbedingung im Schritt (g) erwärmt wird.

4. Verfahren zum Herstellen eines Vorformlings nach Anspruch 3, bei dem der Behälter (14) auf eine Temperatur erwärmt wird, die dieselbe mit oder höher als 100°C im Schritt (g) ist.

5. Verfahren zum Herstellen eines Vorformlings nach Anspruch 3, bei dem der Behälter (14) bei jeder Charge der Herstellung des Vorformlings (12) im Schritt (g) erwärmt wird.

6. Verfahren zum Herstellen eines Vorformlings nach Anspruch 1, weiterhin aufweisend einen Schritt (h) zum Kristallisieren zumindest eines Teils des Behälters (14) im Schritt (b).

7. Verfahren zum Herstellen eines Vorformlings nach Anspruch 6, bei dem ein Bereich des Behälters (14), der im Schritt (d) erwärmt wird, im Schritt (h) kristallisiert wird.

8. Verfahren zum Herstellen eines Vorformlings nach Anspruch 5, bei dem der Behälter (14) auf eine Temperatur erwärmt wird, die dieselbe mit oder höher als 1500°C im Schritt (h) ist.

9. Verfahren zum Herstellen eines Vorformlings nach Anspruch 6, bei dem der Behälter (14), der innerhalb eines anderen Behälters vorgesehen ist, im Schritt (h) erwärmt wird.

10. Verfahren zum Herstellen eines Vorformlings nach Anspruch 1, weiterhin aufweisend einen Schritt (h) zum Kristallisieren zumindest eines Teils des Behälters (14) im Schritt (b) durch Erwärmen des Behälters in einem Vakuumzustand.

11. Verfahren zum Herstellen eines Vorformlings nach Anspruch 6, weiterhin aufweisend einen Schritt des Dotierens des Behälters (14) mit Aluminium im Schritt (h).

12. Verfahren zum Herstellen eines Vorformlings nach Anspruch 1, bei dem eine Menge von in dem Behälter (14) enthaltenen OH-Radikalen so gesteuert wird, dass sie im Schritt (b) unter 20 ppm liegt.

## Revendications

1. Procédé de fabrication d'une préforme (12) d'une fibre optique, comprenant les étapes consistant à :
(a) former une préforme en verre poreux (12) en accumulant des particules de verre ;
(b) préparer un conteneur (14) constitué d'un verre de quartz, qui est formé en chauffant ledit verre de quartz à l'aide d'un four électrique, une quantité du radical OH contenue dans ledit conteneur (14) étant contrôlée pour avoir une valeur inférieure à 150 ppm ;
(c) fournir un gaz de déshydratation et un gaz inerte audit conteneur (14) ;
(d) chauffer ledit conteneur (14) auquel sont fournis le gaz de déshydratation et le gaz inerte ;
(e) insérer ladite préforme en verre poreux (12) dans ledit conteneur (14) après avoir chauffé ledit conteneur (14) ; et
(f) déshydrater et fritter ladite préforme en verre poreux (12)

2. Procédé de fabrication d'une préforme selon la revendication 1, comprenant en outre une étape consistant à (g) éliminer l'humidité absorbée dans ledit conteneur (14) à ladite étape (b).

3. Procédé de fabrication d'une préforme selon la revendication 2, dans lequel ledit conteneur (14) est chauffé dans des conditions de gaz inerte à ladite étape (g).

4. Procédé de fabrication d'une préforme selon la revendication 3, dans lequel ledit conteneur (14) est chauffé à une température, qui est la même ou qui est supérieure à 100 °C à ladite étape (g).

5. Procédé de fabrication d'une préforme selon la revendication 3, dans lequel ledit conteneur (14) est chauffé au niveau de chaque lot de fabrication de ladite préforme (12) à ladite étape (g).

6. Procédé de fabrication d'une préforme selon la revendication 1, comprenant en outre une étape consistant à (h) cristalliser au moins une partie dudit conteneur (14) à ladite étape (b).

7. Procédé de fabrication d'une préforme selon la revendication 6, dans lequel une zone dudit conteneur (14), qui est chauffée à ladite étape (d), est cristallisée à ladite étape (h).

8. Procédé de fabrication d'une préforme selon la revendication 5, dans lequel ledit conteneur (14) est chauffé à une température, qui est la même ou qui est supérieure à 1 500 °C lors de l'étape (h).

9. Procédé de fabrication d'une préforme selon la revendication 6, dans lequel ledit conteneur (14), qui est fourni à l'intérieur d'un autre conteneur, est chauffé à ladite étape (h).

10. Procédé de fabrication d'une préforme selon la revendication 1, comprenant en outre une étape consistant à (h) cristalliser au moins une partie dudit conteneur (14) dans ladite étape (b) en chauffant ledit conteneur dans le vide.

11. Procédé de fabrication d'une préforme selon la revendication 6, comprenant en outre une étape de dopage dudit conteneur (14) à l'aluminium dans ladite étape (h).

12. Procédé de fabrication d'une préforme selon la revendication 1, dans lequel une quantité du radical OH contenue dans ledit conteneur (14) est contrôlée pour être inférieure à 20 ppm à ladite étape (b).
